(19) Europäisches Patentamt
European Patent Office
Office européen des brevets

(11) **EP 0 994 169 B1**

(12) **EUROPÄISCHE PATENTSCHRIFT**

(45) Veröffentlichungstag und Bekanntmachung des Hinweises auf die Patenterteilung:
**11.02.2004 Patentblatt 2004/07**

(51) Int Cl.7: **C09J 7/04**

(21) Anmeldenummer: **99118876.4**

(22) Anmeldetag: **24.09.1999**

(54) **Verfahren zur Herstellung einseitiger Klebebänder durch deren strahlenchemische Vernetzung, sowie Verwendung dieser Klebebänder**

Method for producing single-sided adhesive tapes by radiation-chemical crosslinking and use of the adhesive tapes

Procédé de fabrication de rubans adhésifs monofaces par réticulation à l'aide de radiations et utilisation de ces rubans adhésifs

(84) Benannte Vertragsstaaten:
**DE ES FR GB IT**

(30) Priorität: **12.10.1998 DE 19846901**

(43) Veröffentlichungstag der Anmeldung:
**19.04.2000 Patentblatt 2000/16**

(73) Patentinhaber: **Tesa AG**
**20253 Hamburg (DE)**

(72) Erfinder:
• **Leydecker, Heiko**
**24730 Neustadt/Holstein (DE)**
• **Spies, Manfred, Dr.**
**35216 Biedenkopf (DE)**
• **Neuhaus-Steinmetz, Hermann**
**22926 Ahrensburg (DE)**

(56) Entgegenhaltungen:
**EP-A- 0 430 488          EP-A- 0 453 254**

• **PATENT ABSTRACTS OF JAPAN vol. 006, no. 007 (C-087), 16. Januar 1982 (1982-01-16) & JP 56 131682 A (NITTO ELECTRIC IND CO LTD), 15. Oktober 1981 (1981-10-15)**
• **DATABASE WPI Section Ch, Week 199507 Derwent Publications Ltd., London, GB; Class A18, AN 1995-049077 XP002141090 & JP 06 330003 A (SURION TEC KK), 29. November 1994 (1994-11-29)**

**Beschreibung**

Die Erfindung betrifft ein Verfahren zur Herstellung von Klebebändern, wobei einseitig mit einer Klebmasse beschichtete Klebebänder einer strahlenchemischen Vernetzung unterworfen werden, sowie deren Verwendung.

Es ist bekannt, daß insbesondere bei Acrylaten zur Einstellung spezieller Klebeigenschaften ein Vernetzungsschritt erforderlich ist. Auch bei Kautschuken wird durch die Vernetzung eine Verbesserung der klebtechnischen Daten, insbesondere im Hinblick auf die Kohäsion, erreicht.

Weiterhin ist bekannt, daß sich mit zunehmender Vernetzung die Löslichkeit von Kautschuken und Acrylaten in organischen Lösungsmitteln verringert.

Verbunden mit der Verbesserung der Kohäsion und der Lösungsmittelbeständigkeit nach Elektronenstrahlvernetzung (ES-Vernetzung) ist jedoch häufig ein drastisches Absinken von Klebkraft und Tack.

Dieses führt bei Produktentwicklungen, insbesondere bei Gewebeklebebändern, bei denen eine Lösungsmittelbeständigkeit neben akzeptablen Kleb- beziehungsweise Abrollkräften erwünscht sind, zu erheblichen Problemen, die zur Zeit nicht zufriedenstellend gelöst werden können.

Neben chemisch/thermischen Vernetzungsmethoden liegt bei der Herstellung von Klebebändern die Anwendung der strahlenchemischen Vernetzung, wie UV oder ESH nahe.

Das Dosistiefenprofil in einem an einer Elektronenstrahlanlage bestrahlten Produkt ist für gegebene Beschleunigungsspannungen bekannt. Von verschiedenen Autoren wurden empirische Funktionen zu deren Beschreibung entwickelt (siehe zum Beispiel Heger, beta-gamma 1, 20,1990 oder Neuhaus-Steinmetz, RadTech Europe, Mediterraneo, 1993).

Als Grundlage der Berechnung für die Strahlendosis wird zum Beispiel folgende empirische Formel verwendet, die von Neuhaus-Steinmetz auf der RadTech Europe, Mediterraneo 1993, veröffentlicht worden ist.

$$D[\%] = \frac{\exp\left\{-\left(\frac{18,8 * X}{(U_B)^{1,57}} - 0,7\right)^2\right\}}{1 + \left(\frac{9,7 * X}{(U_B)^{1,57}}\right)^{15}}$$

mit

D      Dosis in %
$U_B$     Beschleunigungsspannung in kV
X      durchstrahltes Flächengewicht in $g/m^2$, bestehend aus Flächengewicht des Vakuumfensters, Luftspalt zwischen Vakuumfenster und Produkt und Tiefe im Produkt

Für Produkte, die aus einer zu bestrahlenden Beschichtung, die auch ein Haftkleber sein kann, und einem strahlendegradierbaren Träger bestehen, ist eine Optimierung der Beschleunigungsspannung bekannt. Hierbei erhält der Träger eine deutlich geringere mittlere Dosis als die Beschichtung, während sich der Dosisabfall in der Beschichtung noch in einem zulässigen Rahmen für eine gleichmäßige Vernetzung bewegt (Karmann, 7. Münchener Klebstoff- und Veredlungsseminar, 1982; EP 0 453 254 (Yarosso u.a.)).

Bei Kabelbandagierungen in Motorenräumen von Kraftfahrzeugen auf der Basis von Klebebändern, die einen Träger aus Gewebe oder Vlies haben, löst Benzin oder Diesel die Klebemasse an, wodurch ein Teil der Klebemasse auf die Außenseite des Trägers wandert. Hierdurch wird die Kabelbandagierung außen klebrig und nimmt im Laufe der Jahre erhebliche Mengen Schmutz auf.

Die Migration von angelöster Klebemasse auf die andere Seite des Trägers kann unterdrückt werden, indem man die Klebemasse stark vernetzt. Eine zu einer ausreichenden Unlöslichkeit führende Vernetzung zieht jedoch, wie bereits erwähnt, in vielen Fällen zu geringe Klebkräfte und nicht anwendungsgerechte Abrollkräfte nach sich.

Dieser Mangel wird in der Praxis dadurch behoben, daß der Träger in einem ersten Arbeitsgang eine Beschichtung erhält, die hochvernetzt wird und so vor dem trägerseitigen Eindringen von Lösungsmitteln schützt, und in einem zweiten Arbeitsgang eine zweite Masseschicht aufgetragen wird, deren Klebeigenschaften durch eine frei wählbare Vernetzung auf die gewünschten Klebeigenschaften eingestellt werden kann. Die Vernetzung wird hierbei auch mit Hilfe von UV- oder Elektronenstrahlen durchgeführt. Mit Hilfe von Vernetzungspromotoren, die vorzugsweise der trägernahen Masse zugesetzt werden, kann erreicht werden, daß die trägernahe Masseschicht bei gleicher UVoder Elektronenstrahldosis wesentlich stärker vernetzt als die äußere Masseschicht. Die Strahlenvernetzung kann dann für beide Massen gemeinsam in einem Durchgang erfolgen.

Alternativ dazu lassen sich die Produkteigenschaften einstellen, wenn auf eine erste Beschichtung mit nachfolgender Bestrahlung mit höherer Intensität eine zweite Beschichtung mit nachfolgender Bestrahlung mit geringerer Intensität in einem Arbeitsgang folgt.

Beide Varianten sind extrem aufwendig und kostenintensiv. Eine Fertigung in einem Arbeitsgang mit zwei hintereinander geschalteten Auftragswerken und einer anschließenden Bestrahlungseinheit, wobei mit dem ersten Auftragswerk eine mit UV/ESH-Promotoren versetzte Masse beschichtet wird und im zweiten Auftragswerk eine Masse ohne UV/ESH-Promotoren verwendet wird, ist im Hinblick auf die Rezeptierung sehr anspruchsvoll und praktisch kaum den geplanten Anwendungen anzupassen.

Nachteilig ist ergänzend dazu, daß die Strahlung von der Seite in das Massesystem eintritt, die schwächer vernetzt sein soll als die dem Träger zugewandte Seite.

Ein Beispiel für ein Klebeband auf Gewebebasis zum Bandagieren von Kabelbäumen wird in der DE 44 19 169 A offenbart. Als Träger kommt hierbei ein offener Gewebeträger zum Einsatz, der mit anorganischen Phosphaten oder Hydroxiden und gegebenenfalls mit einem Rückseitenlack ausgerüstet ist. Auf den Träger ist eine polare, mit anorganischen Phosphaten oder Hydroxiden ausgerüstete Selbstklebemasse vom Typ eines Acrylats oder modifizierten Kautschuks beschichtet, die eine geringe Löslichkeit in unpolaren Flüssigkeiten zeigt.

Aus der JP 56 131 682 A ist bekannt, einen mit einer Klebemasse beaufschlagten Träger einseitig mit Elektronenstrahlen zu bestrahlen, wobei die Bestrahlung des Klebebands durch das Trägermaterial des Klebebands auf die Klebmasse erfolgt.

Die bevorzugte Strahlungsdosis soll zwischen 0,1 bis 50 Megarad (entspricht 1 kGy bis 500 kGy), bevorzugt zwischen 0,5 bis 20 Megarad (entspricht 5 kGy bis 200 kGy) liegen.

Keine Erwähnung findet in der JP 56 131 682 A, welche Strahlungsdosen an der dem Trägermaterial zugewandten Klebemasseseite beziehungsweise auf der offenen Klebemasseseite herrschen.

Aufgabe der Erfindung ist es, hier Abhilfe zu schaffen, insbesondere ein Verfahren zu schaffen, das die Nachteile des Standes der Technik nicht, oder zumindest nicht in diesem Maße aufweist.

Gelöst wird diese Aufgabe durch ein Verfahren, wie es im Hauptanspruch näher gekennzeichnet ist. In den Unteransprüchen sind vorteilhafte Ausführungsformen des Verfahrens beschrieben. Weiterhin vom Erfindungsgedanken umfaßt sind nach dem erfindungsgemäßen Verfahren hergestellte Klebebänder sowie die Verwendung dieser Klebebänder.

Demgemäß betrifft die Erfindung ein Verfahren zur strahlenchemischen Vernetzung von einseitig mit einer Klebmasse beschichteten Klebebändern, wobei die Bestrahlung des Klebebands durch das Trägermaterial des Klebebands auf die Klebmasse derartig erfolgt, daß das Trägermaterial und die dem Trägermaterial zugewandte Klebmasseseite eine Dosis von 30 bis 200 kGy, insbesondere 50 bis 150 kGy, ganz besonders 100 kGy, erhalten, und wobei die Beschleunigungsspannung während der Bestrahlung so gewählt wird, daß die Dosis auf der offenen Klebmasseseite auf 0 bis 60 kGy, insbesondere auf 0 bis 50 kGy, ganz besonders auf 10 bis 20 kGy, abgesunken ist.

Hierdurch wird erreicht, daß durch die hohe Vernetzung der Masseschicht auf der dem Träger zugewandten Seite kein Migrieren von Massebestandteilen auf die offene Trägerseite stattfinden kann, während die Klebeeigenschaften des Bandes über die Vernetzung im Bereich der offenen Masseseite über die Elektronenstrahldosisabnahme mit der durchstrahlten Tiefe im Produkt eingestellt werden.

Als Klebmassen werden vorzugsweise eingesetzt Acrylate, Naturkautschuksysteme, Styrolblockcopolymere wie Styrol-Butadien-Styrol, Styrol-Isopren-Styrol oder Styrol-Ethylen-Butylen-Styrol, in Kombination mit Tackyfiern aus Lösung, Dispersion oder als Hotmelt.

Die Klebmassen können des weiteren gefüllt, gefärbt und/oder geschäumt sein.

Weiter bevorzugt werden offene Trägermaterialien wie zum Beispiel Vliese, Spinnvliese oder Gewebe aus PP, PE, Polyester oder anderen für die Anwendung üblichen Polymeren oder Copolymeren.

Der Gewebeträger ist insbesondere ein Zellwoll- oder Baumwollgewebe oder ein Polyestergewebe.

Das erfindungsgemäße Verfahren erlaubt u.a. die kostengünstige Produktion eines Klebebandes mit einem Vlies- oder Gewebeträger für Kabelbandagieranwendungen oder für Anwendungen in Motorenräumen von Kraftfahrzeugen, das durch Benzin- oder Dieseldämpfe keinerlei Beeinträchtigungen erfährt.

Mit der gezielten Einstellung eines Dosisgradienten zur offenen Klebemassenseite können Produkteigenschaften wie zum Beispiel Lösungsmittelunempfindlichkeit und Klebeeigenschaften unabhängig voneinander eingestellt werden. Im folgenden sollen erfindungsgemäße Verfahren sowie nach dem erfindungsgemäßen Verfahren hergestellte Klebebänder anhand von mehreren Beispielen erläutert werden, ohne die Erfindung damit allerdings unnötig einschränken zu wollen.

## Beispiele

### Beispiel 1

Eine übliche Naturkautschuklösungsmittelmasse, bestehend aus Kautschuk, einer Harzkombination aus aromatischen und aliphatischen Kohlenwasserstoffharzen und Naturharzen in Kombination mit Füllstoffen und Alterungsschutzmitteln in Benzin, wird mit einem Streichbalken im Vollstrich kontinuierlich mit einer Schichtdicke von 100 g/m$^2$ auf einem Polyestergewebe mit einer Fadenzahl von 20 Fäden/cm Kette und 22 Fäden/cm Schuß, einer Dicke von 300 µm und einer Reißkraft von > 150 N/cm beschichtet.

Technische Bedingungen:

| Maschine | Hängebeschichtungsanlage |
|---|---|
| Auftragswerk | Streichbalken |
| Trägerbahnaeschwindigkeit | 50 m/min |

Das beschichtete Gewebe wird anschließend thermisch getrocknet:

| Trocknungstemperaturen | Vortrockner 1 | 20 °C |
|---|---|---|
| | 2 | 25 °C |
| | Zone 1 | 30 °C |
| | Zone 2 | 45 °C |
| | Zone 3 | 55 °C |
| | Zone 4 | 55 °C |
| | Zone 5 | 55 °C |
| | Zone 6 | 50 °C |
| | Kühlzone | 45 °C |

Nach der Trocknung erfolgt eine trägerseitige Bestrahlung (Anlage der Firma Polymerphysik) mit einer Dosis von 100 kGy und einer Beschleunigungsspannung von 200 kV.

Das erhaltene Produkt erweist sich nach Bandagierung um einen Prüfkörper und 24-stündiger Lagerung in Dieselkraftstoff als. resistent. Es erfolgt kein Anlösen und anschließendes Hindurchtreten der Klebemasse durch das offenporige Trägermaterial.

Eine alternative Herstellung mit 250 kV bei ansonsten gleichen Parametern ergab zu geringe Kleb- und Abrollkräfte für eine Anwendung als Kabelbandagierungsband. Eine weitere alternative Herstellung mit 150 kV ergab eine nicht ausreichende Beständigkeit gegenüber Dieselkraftstoff und anderen im Motorenraum üblichen Flüssigkeiten.

### Beispiel 2

Ein Polyestergewebe wurde analog Beispiel 1 mit einer Naturkautschukklebemasse beschichtet und bei einer konstanten Elektronenstrahldosis von 100 kGy auf der Oberfläche mit unterschiedlichen Beschleunigungsspannungen von der Trägerseite bzw. Masseseite bestrahlt.

Tabelle 1 zeigt die gemessene Abhängigkeit der klebtechnischen Daten von den Bestahlungsparametem.

Tabelle 1: Abhängigkeit der klebtechnischen Daten von den Bestahlungsparametern

Klebtechnische Daten

**Frischwerte**
**(keine Lagerung):**

| Bestrahlung: | | Trägerseite | Trägerseite | Trägerseite | Trägerseite | Trägerseite | Trägerseite | Trägerseite | Trägerseite | Trägerseite | **Masseseite** |
|---|---|---|---|---|---|---|---|---|---|---|---|
| [kV] | | 150 | 160 | 170 | 180 | 190 | 200 | 210 | 220 | 230 | **230** |
| [kGy] | | 100 | 100 | 100 | 100 | 100 | 100 | 100 | 100 | 100 | **100** |
| AK 0,3m/min | N/cm | 1,69 | 1,46 | 1,51 | 1,66 | 1,44 | 1,59 | 1,00 | 0,70 | 0,80 | **0,5** |
| KK/Stahl | N/cm | 3,46 | 3,39 | 2,92 | 2,99 | 3,30 | 3,07 | 3,00 | 3,20 | 3,00 | **2,66** |
| KK/Rückseite | N/cm | 1,61 | 1,55 | 1,79 | 1,32 | 1,2 | 1,19 | 1,1 | 0,8 | 0,85 | **0,74** |

**Nach Lagerung**
**1 Monat/Raumtemperatur:**

| Bestrahlung: | | Trägerseite | Trägerseite | Trägerseite | Trägerseite | Trägerseite | Trägerseite | Trägerseite | Trägerseite | Trägerseite | Masseseite |
|---|---|---|---|---|---|---|---|---|---|---|---|
| kV | | 150 | 160 | 170 | 180 | 190 | 200 | 210 | 220 | 230 | **230** |
| kGy | | 100 | 100 | 100 | 100 | 100 | 100 | 100 | 100 | 100 | **100** |
| AK 0,3m/min | N/cm | 2,69 | 3,35 | 3,65 | 4,27 | 2,96 | 2,52 | 1,09 | 0,84 | 0,84 | **0,55** |
| KK/Stahl | N/cm | 3,7 | 3,5 | 2,8 | 2,9 | 3,5 | 3,2 | 3,2 | 3,58 | 3,2 | **2,63** |
| KK/Rückseite | N/cm | 1,6 | 2 | 2,1 | 1,7 | 1,3 | 1,5 | 1,22 | 1,46 | 1,19 | **0,60** |

EP 0 994 169 B1

**Nach Lagerung**

**1 Monat/+40 °C**

| Bestrahlung: | | Trägerseite | Trägerseite | Trägerseite | Trägerseite | Trägerseite | Trägerseite | Trägerseite | Trägerseite | Trägerseite | Masseseite |
|---|---|---|---|---|---|---|---|---|---|---|---|
| [kV] | | 150 | 160 | 170 | 180 | 190 | 200 | 210 | 220 | 230 | 230 |
| [kGy) | | 100 | 100 | 100 | 100 | 100 | 100 | 100 | 100 | 100 | 100 |
| AK 0,3m/min | N/cm | 1,72 | 2,14 | 1,62 | 1,87 | 1,95 | 1,8 | 1,2 | 0,78 | 0,76 | 0,53 |
| KK/Stahl | N/cm | 3,8 | 3,6 | 3,3 | 3,1 | 3,2 | 3,1 | 2,97 | 3,2 | 3,14 | 2,80 |
| KK/Rückseite | N/cm | 1,8 | 1,7 | 1,4 | 1,4 | 1,4 | 1,3 | 1,24 | 1,26 | 1,10 | 0,82 |

AK:  Abzugskraft

KK:  Klebkraft

# EP 0 994 169 B1

Von allen Mustern wurde die Beständigkeit gegenüber im KFZ-Bereich üblichen Lösungsmitteln bestimmt, indem Kupferdrähte sorgfältig mit dem Klebeband bandagiert wurden und diese dann für 6 Minuten beziehungsweise 24 Stunden in diversen Lösungsmitteln gelagert wurden. Die Ergebnisse sind in Tabelle 2 zusammengefaßt.

Tabelle 2

| Beständigkeit der Klebebandmuster gegenüber im KFZ-Bereich üblichen Lösungsmitteln | | | | | | |
|---|---|---|---|---|---|---|
| Beständigkeit in Prüfflüssigkeiten | A: 150 kV | B: 160 kV | C: 170 kV | D: 180 kV | E: 190 kV | F: 200 kV | G: 200 kV masseseitig |
| | 100 kGy | 100 kGy | 100 kGy | 100 kGy | 100 kGy | 100 kGy | 100 kGy |
| 6 min. Dieselkraftstoff | + | + | + | + | + | + | + |
| 24 h Dieselkraftstoff | - | - | - | ○ | ○ | + | - |
| 6 min. ASTM ÖL | + | + | + | + | + | + | + |
| 24 h ASTM ÖL | - | - | ○ | ○ | ○ | + | - |
| 6 min. Bremsflussigkeit | - | - | ○ | + | + | + | - |
| 24 h Bremsflüssigkeit | - | - | ○ | ○ | + | + | - |
| Beurteilung der bandagierten Kupferdrähte: + : beständig kein Austreten der Klebemasse ○ : noch akzeptabel - : nicht beständig Austreten angelöster Klebemasse | | | | | | |

Bei offenen Geweben und Vliesen wird bewußt ausgenutzt, daß die Dosisabnahme auf der offenen Masseseite eine Struktur hat, die dadurch ausgebildet wird, daß der Elektronenstrahl keinen, einen, zwei oder mehrere Fäden des Trägers durchdringen mußte. Es bilden sich auf der offenen Masseseite relativ stark vernetzte Inseln, die von weniger vernetzten Bereichen umgeben sind.

**Beispiel 3**

Eine übliche Naturkautschuklösungsmittelmasse, bestehend aus Kautschuk, einer Harzkombination aus aromatischen und aliphatischen Kohlenwasserstoffharzen und Naturharzen in Kombination mit Füllstoffen und Alterungsschutzmitteln in Benzin, wird mit 1% Trimethylolpropantriacrylat (bezogen auf den Feststoffgehalt) versetzt und anschließend mit einem Streichbalken im Vollstrich kontinuierlich mit einer Schichtdicke von 40 g/m$^2$ auf einem Polyestergewebe mit einer Fadenzahl von 20 Fäden/cm Kette und 22 Fäden/cm Schuß, einer Dicke von 300 μm und einer Reißkraft von > 150 N/cm beschichtet.

Technische Bedingungen:

| | |
|---|---|
| Maschine | Hängebeschichtungsanlage |
| Auftragswerk | Streichbalken |
| Trägerbahngeschwindigkeit | 50 m/min |

Das beschichtete Gewebe wird anschließend thermisch getrocknet:

| Trocknungstemperaturen | Vortrockner 1 | 20 °C |
|---|---|---|
| | 2 | 25 °C |
| | Zone 1 | 30 °C |
| | Zone 2 | 45 °C |
| | Zone 3 | 55 °C |
| | Zone 4 | 55 °C |
| | Zone 5 | 55 °C |
| | Zone 6 | 50 °C |
| | Kühlzone | 45 °C |

Nach der Trocknung erfolgt eine trägerseitige Bestrahlung mit einer Dosis von 100 kGy und einer Beschleunigungsspannung von 150 kV.

Das erhaltene Produkt erweist sich nach Bandagierung um einen Prüfkörper und 24-stündiger Lagerung in Dieselkraftstoff als resistent. Es erfolgt kein Anlösen der Klebemasse verbunden mit einer anschließenden Migration. Das erhaltene Produkt zeigt anforderungsgerechte Eigenschaften insbesondere im Hinblick auf Kleb- und Abrollkraft für die Anwendung als Kabelbandagierungsband für die Automobilindustrie. Eine alternative Fertigung mit einer Beschleunigungsspannung von 200 kV ergab nicht ausreichende Kleb- bzw. Abrollkräfte.

**Patentansprüche**

1. Verfahren zur Herstellung von Klebebändern, wobei einseitig mit einer Klebmasse beschichtete Klebebänder einer strahlenchemischen Vernetzung unterworfen werden, indem die Bestrahlung des Klebebands durch das Trägermaterial des Klebebands auf die Klebmasse derartig erfolgt, daß das Trägermaterial und die dem Trägermaterial zugewandte Klebemasseseite eine Dosis von 30 bis 200 kGy, insbesondere 100 kGy, erhalten, und wobei die Beschleunigungsspannung während der Bestrahlung so gewählt wird, daß die Dosis auf der offenen Klebemasseseite auf 0 bis 60 kGy, insbesondere auf 10 bis 20 kGy, abgesunken ist.

2. Verfahren nach Anspruch 1, **dadurch gekennzeichnet, daß** als Klebmassen eingesetzt werden Acrylate, Naturkautschuksysteme, Styrolblockcopolymere wie Styrol-Butadien-Styrol, Styrol-Isopren-Styrol oder Styrol-Ethylen-Butylen-Styrol, in Kombination mit Tackyfiem aus Lösung, Dispersion oder als Hotmelt.

3. Verfahren nach den Ansprüchen 1 und 2, **dadurch gekennzeichnet, daß** die Klebmassen gefüllt, gefärbt und/ oder geschäumt sein können.

4. Verfahren nach den Ansprüchen 1 bis 3, **dadurch gekennzeichnet, daß** offene Trägermaterialien insbesondere aus PP, PE, Polyester oder anderen üblichen Copolymeren eingesetzt werden können

5. Einseitiges Klebeband, erhältlich nach einem Verfahren gemäß den Ansprüchen 1 bis 4.

6. Verwendung eines Klebebands nach den Ansprüchen 1 bis 5 als Kabelbandagierungsband.

**Claims**

1. Process for producing adhesive tapes, in which adhesive tapes coated on one side with an adhesive composition are subjected to radiation crosslinking, the irradiation of the adhesive tape taking place through the backing material of the adhesive tape onto the adhesive composition in such a way that the backing material and that side of the adhesive composition facing the backing material receive a dose of from 30 to 200 kGy, in particular 100 kGy, and the acceleration voltage during the irradiation being chosen such that the dose on the open side of the adhesive composition has fallen from 0 to 60 kGy, in particular from 10 to 20 kGy.

2. Process according to Claim 1, **characterized in that** adhesive compositions employed are acrylates, natural rubber systems, styrene block copolymers such as styrene-butadiene-styrene, styrene-isoprene-styrene or styrene-ethylene-butylene-styrene, in combination with tackifiers from solution, from dispersion, or in the form of a hot melt.

3. Process according to Claims 1 and 2, **characterized in that** the adhesive compositions can be filled, coloured and/or foamed.

4. Process according to Claims 1 to 3, **characterized in that** open backing materials, in particular comprising PP, PE, polyesters or other customary copolymers, can be employed.

5. Single-sided adhesive tape obtainable by a process according to Claims 1 to 4.

6. Use of an adhesive tape according to Claims 1 to 5 as a cable bandaging tape.


**Revendications**

1. Procédé de production de rubans adhésifs, dans lequel un ruban adhésif recouvert sur un côté d'une masse adhésive est soumis à une réticulation radiochimique, en ce que l'irradiation du ruban adhésif au travers du matériau de support du ruban adhésif et sur la masse adhésive est entreprise de manière que le matériau de support et le côté de masse adhésive dirigé vers le matériau de support reçoivent une dose de 30 à 200 kGy, en particulier de 100 kGy, et que la tension d'accélération pendant l'irradiation est choisie de manière que la dose appliquée au côté exposé de la masse adhésive soit abaissée à une valeur de 0 à 60 kGy, en particulier de 10 à 20 kGy.

2. Procédé selon la revendication 1, **caractérisé en ce que** l'on met en oeuvre comme masses adhésives des acrylates, des systèmes de caoutchouc naturel, des copolymères blocs de styrène tels que le styrène - butadiène - styrène, le styrène - isoprène-styrène ou le styrène - éthylène - butylène - styrène, en combinaison avec des agents adhérisants, en solution, en dispersion ou en masse fondue.

3. Procédé selon les revendications 1 et 2, **caractérisé en ce que** les masses adhésives peuvent être chargées, colorées et/ou expansées.

4. Procédé selon lés revendications 1 à 3, **caractérisé en ce que** l'on peut mettre en oeuvre des matériaux de support lâches, en particulier à base de PP, de PE, de polyester ou d'autres copolymères usuels.

5. Ruban adhésif monoface, que l'on peut obtenir par un procédé selon les revendications 1 à 4.

6. Utilisation d'un ruban adhésif selon les revendications 1 à 5 comme ruban d'enveloppement de faisceaux de câbles.